# EUROPEAN PATENT SPECIFICATION

(11) **EP 1 236 778 B1**
(45) Date of publication and mention of the grant of the patent: **08.10.2008**
(21) Application number: 02250656.2
(22) Date of filing: 31.01.2002
(51) Int. Cl.: C09D 11/00

(54) **Inkjet ink having improved directionality by controlling surface tension and wetting properties**
Tintenstrahldrucktinte mit verbesserter Tröpfchenrichtung durch Kontrolle der Oberflächenspannung und Benetzungseigenschaften
Encre pour impression par jet d'encre ayant une trajectoire des gouttes améliorée par contrôle de la tension superficielle et des propriétés mouillantes

(30) Priority: 02.03.2001 US 798704
(43) Date of publication of application: 04.09.2002
(73) Proprietor: Hewlett-Packard Company, Palo Alto CA 94304-1112 (US)
(72) Inventor: Reboa, Paul F., Corvallis, OR 97330 (US); Moffatt, John R., Corvallis, OR 97330 (US); Knight, William R., Corvallis, OR 97330 (US)
(74) Representative: Jackson, Richard Eric

(56) References cited:
- EP-A- 0 477 555
- EP-A- 0 583 096
- US-A- 5 469 199
- US-A- 5 626 655
- US-A- 5 880 758
- US-A- 5 972 082

## Description

### TECHNICAL FIELD

The present invention is directed to inkjet inks, and, more particularly, to inkjet inks that evidence improved directionality during jetting through nozzles of an inkjet cartridge.

### BACKGROUND ART

Thermal inkjet print cartridges operate by rapidly heating a small volume of ink to cause the ink to vaporize and be ejected through one of a plurality of orifices so as to print a dot of ink on a recording medium, such as a sheet of paper. Typically, the orifices are arranged in one or more linear arrays in a nozzle member. The properly sequenced ejection of ink from each orifice causes characters or other images to be printed upon the paper as the printhead is moved relative to the paper. The paper is typically shifted each time the printhead has moved across the paper. The thermal inkjet printer is fast and quiet, as only the ink strikes the paper. These printers produce high quality printing and can be made both compact and affordable.

In one prior art design, the inkjet printhead generally includes: (1) ink channels to supply ink from an ink reservoir to each vaporization chamber proximate to an orifice; (2) a metal orifice plate or nozzle member in which the orifices are formed in the required pattern; and (3) a silicon substrate containing a series of thin film resistors, one resistor per vaporization chamber.

To print a single dot of ink, an electrical current from an external power supply is passed through a selected thin film resistor. The resistor is then heated, in turn su- perheating a thin layer of the adjacent ink within a vaporization chamber, causing explosive vaporization, and, consequently, causing a droplet of ink to be ejected through an associated orifice onto the paper.

A recurring problem over the years involves drop trajectory as the drop is ejected through the orifice onto a print medium, e.g.., paper. For example, whenever an ink drop is ejected from an orifice of an orifice plate, a trailing portion or "tail" of ink moves with the drop. A small amount of the ink tail may separate and land on the outer surface of the plate as an ink droplet. Residual ink that collects on the orifice plate outer surface near the edges of the orifices may contact subsequently ejected ink drops, thereby altering the trajectory of those drops, which reduces the quality of the printed image.

Also, in the event that a substantial amount of residual ink accumulates on the orifice plate outer surface, a continuous liquid path between the ink within the orifice and the ink on the outer surface may be formed, thereby facilitating leakage of the ink out of the orifice. Further, when a substantial amount of ink accumulates on an orifice plate, this large pool of ink can interfere with drop ejection to the extent that no drops are ejected, i.e., a single drop is unable to pass through the large pool of ink. Moreover, the residual ink on the outer surface of the plate tends to trap minute particles, such as paper fibers, thereby interfering with the trajectory of subsequently-ejected drops.

For many years, ink jet technologies which have been developed to produce printheads for ink jet printers and the like have included sub-categories or sub-technolo- gies directed specifically to forming the output ink ejection orifice plate or nozzle plate for controlling the ink drop patterns and ink trajectories onto an adjacent print medium. As is well-known to those skilled in the art, these orifice plate technologies include those for making silicon orifice plates, glass orifice plates, plastic orifice plates, and metal orifice plates of many different kinds of materials in each of the latter four types of orifice plate categories. In addition, these metal (e.g., nickel) orifice plate technologies include electroforming and electroplating processes including the fabrication of mandrels for making small geometry precision architecture orifice plates for attachment to thin film printhead substrates.

A variety of solutions have been patented that deal with drop trajectory. Many of these solutions comprise various alterations of the mechanical aspect of the printer, and examples of such solutions include: (1) off-setting the orifice from the resistor (see, e.g., U.S. Patent 4,794,411, entitled "Thermal Ink-Jet Head Structure with Orifice Offset from Resistor", issued December 27, 1988, to Howard H. Taub et al); (2) providing a drop detector for measuring flight characteristics of the drop and correcting the drop fire timing and image data to produce a higher quality image (see, e.g., U.S. Patent 5,109,239, entitled "Inter Pen Offset Determination and Compensation in Multi-Pen Ink Jet Printing Systems", issued April 28, 1992, to Keith E. Cobbs et al); (3) eliminating the orifice plate (see, e.g., U.S. Patent 5,371,527, entitled "Orificeless Printhead for an Ink Jet Printer", issued December 6, 1994, to Robert J. Miller et al); (4) reconfiguring the fabrication of a printhead to prevent bending of a nozzle member, which skews the nozzles, by forming the nozzles at a slight inward angle (see, e.g., U.S. Patent 5,467,115, entitled "Inkjet Printhead Formed to Eliminate Ink Trajectory Errors", issued November 14, 1995, to Winthrop D. Childers); and (5) altering the architecture of the pen itself, that is, the structural portions, including passageways and peninsulas, that guide the ink to the firing chambers (U.S. Patent 5,685,074, entitled "Method of Forming an Inkjet Printhead with Trench and Backward Peninsulas", issued November 11, 1997, to Yichuan Pan et al).

Other solutions include: (1) providing selected portions of the orifice plate with wetting and non-wetting surface characteristics (see, e.g., U.S. Patent 5,434,606, entitled "Orifice Plate for an Ink-Jet Pen", issued July 18, 1995, to Suraj L. Hindagolla et al); and (2) treatment of the inner and outer surfaces of the orifice plate with self-assembled monolayers (see, e.g., U.S. Patent 5,598,193, entitled "Treatment of an Orifice Plate with Self-Assembled Monolayers", issued January 28, 1997, to David J. Halko et al).

The ink itself has been reformulated in an attempt to overcome drop trajectory problems; see, e.g., (1) U.S. Patent 5,098,476, entitled "Additive to Aqueous-Based Inks to Improve Print Quality", issued March 24, 1992, to Jeffrey P. Baker and (2) U.S. Patent 5,112,399, entitled "Plain Paper Inks", issued May 12, 1992, to Leonard Slevin et al.

In U.S. Patent 5,098,476, a low molecular weight alcohol or a surfactant/-defoming agent is added to reduce the surface tension of the ink and increase the surface wettability on paper. In U.S. Patent 5,112,399, a viscosity modifier, such as an alginate, is used to increase the viscosity of the ink and thereby reduce spray and improve drop directionality.

Other modifications of inkjet inks involving surface tension control have also been undertaken, for a variety of reasons. For example, U.S. Patent 5,880,758, entitled "Printer with Pen Containing a Low Dot Spread Black Ink and a High Dot Spread Color Ink", issued March 9, 1999, to John L. Stoffel et al, discloses use of a surface tension in the range of 25 to 40 dyne/cm and a viscosity in the range of 1.5 to 10 cp for a relatively high dot spread ink (color ink) and a surface tension in the range of 45 to 65 dyne/cm and a viscosity in the same range as the color ink for a relatively low dot spread ink (black ink).

The combination of adjusting the surface tension of the ink and the contact angle of the ink and a solid surface, such as the print medium or a surface within the pen has also been considered; see, e.g., US Patent 5,626,655, entitled "Use of Co-Surfactants to Adjust Properties of Inks", issued May 6, 1997, to Norman E. Pawlowski et al.

See also US Patents 4,555,062 and 4,583,690, both entitled "Anti-Wetting in Fluid Nozzles", issued November 26, 1985 and April 22,1986, respectively, to Young S. You, which disclose a novel ionic surface preparation for nozzles used in spraying fluid droplets such as used in inkjet printers.

In most cases, it appears that the prior art is primarily directed to lowering the surface tension of the ink in order to deal with print quality issues, such as feathering of the print on the print medium, blooming, and the like.

US 5,626,655 discloses an ink-jet ink composition wherein the ink composition includes a combination of surfactants to simultaneously reduce bleed between adjacently-printed colours and to improve wetting and cloud point characteristics. Examples of surfactants that are employed to control bleed are amine oxide surfactants such as N-dimethyl-N-dodecyl amine oxide (NDAO) and N,N-dimethyl-N-tetradecylamine oxide (NTAO).

Recent advances in inkjet printheads have moved in the direction of printing smaller and smaller drop volumes, with a reduction in diameter of the orifices in the printhead. As a consequence, the proper trajectory of the ejected ink droplet becomes more and more critical, and the ink must be carefully conditioned by its formulation to achieve the required trajectory. While the above-discussed patents are certainly suitable for their intended purposes, they do not deal with the issue of reduced drop volumes and their effects on droplet trajectories.

Thus, there remains a need for improved directionality of the ink as it leaves the printhead. Specifically, a need exists for an ink having reduced tail breakup and improved drop trajectory, with a concomitant improvement in print quality.

### DISCLOSURE OF INVENTION

According to a first aspect of the invention, there is provided an inkjet ink containing at least one surface active additive selected from the group consisting of: (a) a betaine having the formula R₁R₂R₃-N⁺-CH₂-COO⁻
where R₁ is a C₈ to C₂₂ alkyl chain, and R₂ and R₃ are independently C₁ to C₄ alkyl chains; (b) a sulfo-betaine having the formula R₁R₂R₃-N⁺-CH₂-SO₃⁻
where R₁ is a C₈ to C₂₂ alkyl chain, and R₂ and R₃ are independently C₁ to C₄ alkyl chains; and (c) a group transfer polymerization polymer having the formula 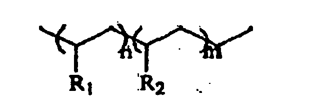 where:
R₁ = 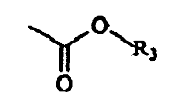
R₂ = -COO⁻M⁺, -SO3⁻M⁺, -N⁺(R₄)₃ X⁻
R₃ = 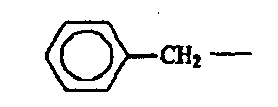 C₁ to C₃₀ alkyl, aryl, or alkylaryl radical
R₄ = independently any of the R₃ moieties; M⁺ = Na⁺, K⁺, (CH₃)₄N⁺ and (C₂H₅)₄N⁺;
X = F⁻, Cl⁻, Br⁻, 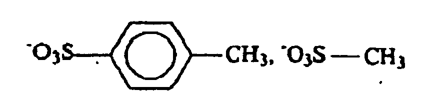
n is any integer of 1 to 100; and m is any integer of 1 to 100, wherein the inkjet ink has a surface tension of at least 35 dyne/cm.

There is also provided an inkjet printhead ink as defined above, and an orifice in an orifice plate, wherein said inkjet ink has a surface tension of at least 35 dyne/cm and a contact angle with said orifice plate (104) having a value within a range of 35 to 65 degrees.

Additionally there is provided a method of reducing tail breakup and improving drop trajectory in an inkjet ink, said method comprising providing said inkjet ink having at least one surface active additive as defined immediately above, a surface tension of at least 35 dyne/cm and a contact angle of 35 to 65 degrees between said ink-jet ink and an orifice plate.

Furthermore, there is provided a use of a surface active additive for reducing tail breakup and improving drop trajectory in an inkjet ink, wherein said surface active is selected from the group consisting of: (a) a betaine having the formula R₁R₂R₃-N⁺-CH₂-COO⁻
where R₁ is a C₈ to C₂₂ alkyl chain, and R₂ and R₃ are independently C₁ to C₄ alkyl chains; (b) a sulfo-betaine having the formula R₁R₂R₃-N⁺-CH₂-SO₃⁻
where R₁ is a C₈ to C₂₂ alkyl chain, and R₂ and R₃ are independently C₁ to C₄ alkyl chains; and (c) a group transfer polymerization polymer having the formula 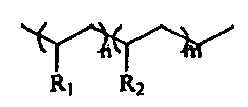 where:
R₁ = 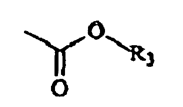
R₂ = -COO⁻M⁺, -SO₃⁻M⁺, -N⁺(R₄)₃ X⁻
R₃ = 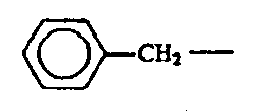 C₁ to C₃₀ alkyl, aryl, or alkylaryl radical
R₄ = independently any of the R₃ moieties; M⁺ = Na⁺, K⁺, (CH₃)₄N⁺ and (C₂H₅)₄N⁺;
X = F⁻, Cl⁻, Br⁻, 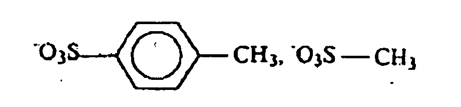
n is any integer of 1 to 100; and m is any integer of 1 to 100; and
(d) an amine oxide having the formula 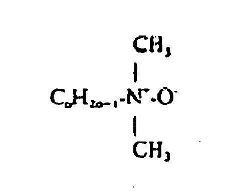 where n is greater than 8 and less than 16.

### BRIEF DESCRIPTION OF THE DRAWINGS

FIG. 1 is a schematic illustration of a representative thermal inkjet cartridge unit which is suitable for use in the practice of the present invention;
FIG. 2 is a schematic, enlarged cross-sectional view of the printhead associated with the thermal inkjet cartridge unit of FIG. 1;
FIG. 3a is a series of sequential views of an inkjet ink that is jetted from a firing chamber, wherein the ink has a surface tension of 100 dyne/cm;
FIG. 3b is a view similar to that of FIG. 3a, but wherein the ink has a surface tension of 25 dyne/cm;
FIG. 4, on coordinates of target radial deviation (in microns) and different amine oxide surfactants, is a bar plot of the effect of different amine oxide surfactants on directionality;
FIG. 5, on coordinates of momentum (in Kg/m) and contact angle (in degrees), is a plot of showing the correlation of contact angle (surface wetting on an orifice plate comprising KAPTON, an aromatic polyimide) as a function of main drop velocity; and
FIG. 6 is a side elevational view of a droplet of ink in the process of being expelled from a firing chamber such as depicted in FIG. 2.

### BEST MODES FOR CARRYING OUT THE INVENTION

Reference is now made in detail to specific embodiments of the present invention, which illustrate the best modes presently contemplated by the inventors for practicing the invention. Alternative embodiments are also briefly described as applicable.

All concentrations herein are expressed in weight percentages, unless otherwise indicated. The purity of all components is that employed in normal commercial practice for ink-jet inks.

### Representative Thermal Ink-Jet Cartridge.

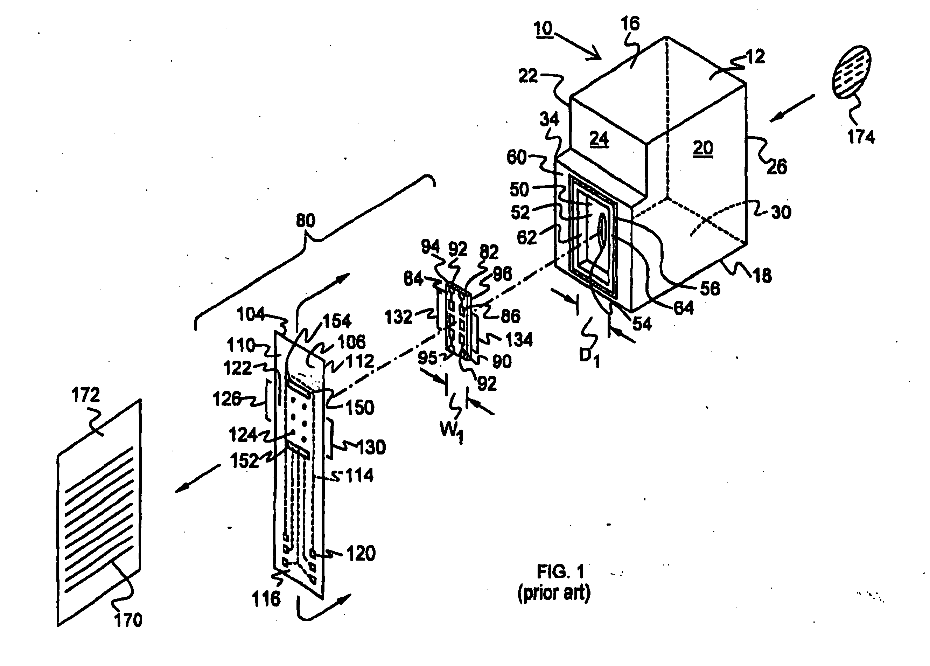

With reference to FIG. 1, a representative thermal inkjet ink cartridge 10 is illustrated. This cartridge is of a general type shown and described in U.S. Patent 6,0990,749 to Kowalski, U.S. Patent 5,278,584 to Keefe et al. and the Hewlett-Packard Journal, Vol. 39, No. 4 (August 1988). The cartridge 10 is presented in schematic format, with more detailed information involving this product being provided in U.S. Patent 5,278,584. As illustrated in FIG. 1, the cartridge 10 first includes a housing 12 which is preferably manufactured from plastic, metal, or a combination of both. The housing 12 further comprises a top wall 16, a bottom wall 18, a first side wall 20, and a second side wall 22. In the embodiment of FIG. 1, the top wall 16 and the bottom wall 18 are substantially parallel to each other. Likewise, the first side wall 20 and the second side wall 22 are also substantially parallel to each other.

The housing 12 likewise includes a front wall 24 and a rear wall 26. Surrounded by the front wall 24, top wall 16, bottom wall 18, first side wall 20, second side wall 22, and rear wall 26 is an interior chamber or compartment 30 within the housing 12 (shown in phantom lines in FIG. 1) which is designed to retain a supply of ink therein as discussed below. The front wall 24 further includes an externally-positioned, outwardly-extending printhead support structure 34 which comprises a substantially rectangular central cavity 50 therein. The central cavity 50 includes a bottom wall 52 shown in FIG. 1 with an ink outlet port 54 therein. The ink outlet port 54 passes entirely through the housing 12 and, as a result, communicates with the compartment 30 inside the housing 12 so that ink materials can flow outwardly from the compartment 30 through the ink outlet port 54.

Also positioned within the central cavity 50 is a rectangular, upwardly-extending mounting frame 56, the function of which will be discussed below. As schematically shown in FIG. 1, the mounting frame 56 is substantially even (flush) with the front face 60 of the printhead support structure 34. The mounting frame 56 specifically includes dual, elongate side walls 62, 64 which will likewise be described in greater detail below.

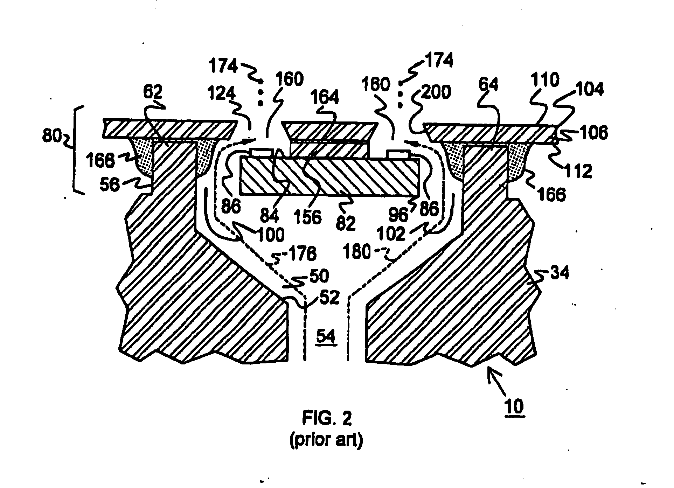

With continued reference to FIG. 1, fixedly secured to housing 12 of the ink cartridge unit 10 (e.g., attached to the outwardly-extending printhead support structure 34) is a printhead generally designated in FIG. 1 at reference number 80. For the purposes of this invention and in accordance with conventional terminology, the printhead 80 actually comprises two main components secured together (with certain sub-components positioned therebetween). These components and additional information concerning the printhead 80 are provided in U.S. Patent. 5,278,584 to Keefe et al. which again discusses the ink cartridge 10 in considerable detail and is incorporated herein by reference. The first main component used to produce the printhead 80 consists of a plate-like support member, or die, 82 preferably manufactured from silicon. Secured to the upper surface 84 of the support member 82 using conventional thin film fabrication techniques is a plurality of individually-energizable thin-film resistors 86 which function as "ink ejectors" and are preferably made from a tantalum-aluminum composition known in the art for resistor fabrication. Only a small number of resistors 86 are shown in the schematic representation of FIG. 1, with the resistors 86 being presented in enlarged format for the sake of clarity. Also provided on the upper surface 84 of the support member 82 using conventional photolithographic techniques is a plurality of metallic conductive traces 90 which electrically communicate with the resistors 86. The conductive traces 90 also communicate with multiple metallic pad-like contact regions 92 positioned at the ends 94, 95 of the support member 82 on the upper surface 84. The function of all these components which, in combination, are collectively designated herein as a resistor assembly 96 will be discussed further below. Many different materials and design configurations may be used to construct the resistor assembly 96, with the present invention not being restricted to any particular elements, materials, and components for this purpose. However, in a preferred, representative, and non-limiting embodiment described in U.S. Patent 5,278,584 to Keefe et al., the resistor assembly 96 will be approximately 0.5 inches long, and will likewise contain 300 resistors 86 thus enabling a resolution of 600 dots per inch ("DPI"). The support member 82 containing the resistors 86 thereon will preferably have a width "W₁" (FIG. 1) which is less than the distance "D₁" between the side walls 62, 64 of the mounting frame 56. As a result, ink flow passageways 100, 102 (schematically shown in FIG. 2) are formed on both sides of the support member 82 so that ink flowing from the ink outlet port 54 in the central cavity 50 can ultimately come in contact with the resistors 86. It should also be noted that the support member 82 may include a number of other components thereon (not shown) depending on the type of ink cartridge unit 10 under consideration. For example, the support member 82 may likewise include a plurality of logic transistors for precisely controlling operation of the resistors 86, as well as a "demultiplexer" of conventional configuration as discussed in U.S. Patent 5,278,584. The demultiplexer is used to demultiplex incoming multiplexed signals and thereafter distribute these signals to the various thin film resistors 86. The use of a demultiplexer for this purpose enables a reduction in the complexity and quantity of the circuitry (e.g., contract regions 92 and traces 90) formed on the support member 82. Other features of the support member 82 (e.g., the resistor assembly 96) will be presented below.

Securely affixed to the upper surface 84 of the support member 82 (with a number of intervening material layers therebetween including a barrier layer and an adhesive layer in the conventional design of FIG. 1) is the second main component of the printhead 80. Specifically, an orifice plate 104 is provided as shown in FIG. 1 which is used to distribute the selected ink compositions to a designated print media material including the substrate of the present invention. Prior orifice plate designs involved a rigid plate structure manufactured from an inert metal composition (e.g., gold-plated nickel) which can also be used in the cartridge 10 of FIG. 1. However, recent developments in thermal inkjet technology have resulted in the use of non-metallic, organic polymer films to construct the orifice plate 104. As illustrated in FIG. 1, this type of orifice plate 104 will consist of a flexible film-type member 106 manufactured from a selected non-metallic organic polymer having a uniform thickness of about 1.0 to 2.0 mils (0.00254 to 0.00508 cm) in a representative embodiment. For the purposes of this invention, the term "non-metallic" shall involve a composition which does not contain any elemental metals, metal alloys, or metal amalgams (e.g., metal mixtures). Likewise, the phrase "organic polymer" shall involve a long-chain carbon-containing structure of repeating chemical subunits. A number of different polymeric compositions may be employed for this purpose, with the present invention not being restricted to any particular construction materials. For example, the orifice plate 104 may be manufactured from the following compositions: polytetrafluoroethylene (e.g., Teflon®), polyimide, polymethylmethacrylate, polycarbonate, polyester, polyamide polyethylene-terephthalate, or mixtures thereof. Likewise, a representative commercial organic polymer (e.g., polyimide-based) composition that is suitable for constructing the orifice plate 104 is a product sold under the trademark "KAPTON" by the DuPont Corporation of Wilmington, Del. (USA). KAPTON is an aromatic polyimide that is the result of a polycondensation reaction between pyromellitic dianhydride and 4,4-diaminodiphenyl ether. As shown in the schematic illustration of FIG. 1, the flexible orifice plate 104 is designed to "wrap around" the outwardly extending printhead support structure 34 in the completed ink cartridge 10.

The film-type member 106 used to produce the orifice plate 104 further includes a top surface 110 and a bottom surface 112 (FIGS. 1 and 2). Formed on the bottom surface 112 of orifice plate 104 and shown in dashed lines in FIG. 1 is a plurality of metallic (e.g., copper) circuit traces 114 which are applied to the bottom surface 112 using known metal deposition and photolithographic techniques. Many different circuit trace patterns may be employed on the bottom surface 112 of the orifice plate 104, with the specific pattern depending on the particular type of ink cartridge unit 10 and printing system under consideration. Also provided at position 116 on the top surface 110 of the orifice plate 104 is a plurality of metallic (e.g., gold-plated copper) contact pads 120. The contact pads 120 communicate with the underlying circuit traces 114 on the bottom surface 112 of the orifice plate 104 using small openings or "vias" (not shown) through the orifice plate 104. During use of the ink cartridge 10 in a printer unit, the pads 120 come in contact with corresponding printer electrodes in order to transmit electrical control signals from the printer unit to the contact pads 120 and circuit traces 114 on the orifice plate 104 for ultimate delivery to the resistor assembly 96. Electrical communication between the resistor assembly 96 and the orifice plate 104 will be discussed below.

Positioned within the middle region 122 of the film-type member 106 used to produce the orifice plate 104 is a plurality of openings or orifices 124 which pass entirely through the orifice plate 104. These orifices 124 are shown in enlarged format in FIG. 1. Each orifice 124 in a representative embodiment will have a diameter of about 0.01 to 0.05 mm. In the completed printhead 80, all of the components listed above are assembled so that each of the orifices 124 is aligned with at least one of the resistors 86 (e.g., "ink ejectors") on the support member 82. As result, energization of a given resistor 86 will cause ink expulsion from the desired orifice 124 through the orifice plate 104. The claimed invention shall not be limited to any particular size, shape, or dimensional characteristics in connection with the orifice plate 104 and shall likewise not be restricted to any number or arrangement of orifices 124. In a representative embodiment as presented in FIG. 1, the orifices 124 are arranged in two rows 126, 130 on the orifice plate 104. If this arrangement of orifices 124 is employed, the resistors 86 on the resistor assembly 96 (e.g., the support member 82) will also be arranged in two corresponding rows 132, 134 so that the rows 132, 134 of resistors 86 are in substantial registry with the rows 126, 130 of orifices 124.

Finally, as shown in FIG. 1, dual rectangular windows 150, 152 are provided at each end of the rows 126, 130 of orifices 124. Partially positioned within the windows 150, 152 are beam-type leads 154 which, in a representative embodiment, are gold-plated copper and constitute the terminal ends (e.g., the ends opposite the contact pads 120) of the circuit traces 114 positioned on the bottom surface 112 of the orifice plate 104. The leads 154 are designed for electrical connection by soldering, thermocompression bonding, and the like to the contact regions 92 on the upper surface 84 of the support member 82 associated with the resistor assembly 96. Attachment of the leads 154 to the contact regions 92 on the support member 82 is facilitated during mass production manufacturing processes by the windows 150, 152 which enable immediate access to these components. As a result, electrical communication is established from the contact pads 120 to the resistor assembly 96 via the circuit traces 114 on the orifice plate 104. Electrical signals from the printer unit (not shown) can then travel via the conductive traces 90 on the support member 82 to the resistors 86 so that on-demand heating (energization) of the resistors 86 ("ink ejectors") can occur.

At this point, it is important to briefly discuss fabrication techniques in connection with the structures described above which are used to manufacture the printhead 80. Regarding the orifice plate 104, all of the openings therethrough including the windows 150, 152 and the orifices 124 are typically formed using conventional laser ablation techniques as again discussed in U.S. Patent 5,278,584 to Keefe et al. Specifically, a mask structure initially produced using standard lithographic techniques is employed for this purpose. A laser system of conventional design is then chosen which, in a preferred embodiment, involves an excimer laser of a type selected from the following alternatives: F₂, ArF, KrCl, KrF, or XeCl. Using this particular system (along with preferred pulse energies of greater than about 100 millijoules/cm² and pulse durations shorter than about 1 microsecond), the above-listed openings (e.g., orifices 124) can be formed with a high degree of accuracy, precision, and control. However, the claimed invention shall not be limited to any particular fabrication method, with other methods also being suitable for producing the completed orifice plate 104 including conventional ultraviolet ablation processes (e.g., using ultraviolet light in the range of about 150 to 400 nm), as well as standard chemical etching, stamping, reactive ion etching, ion beam milling, and additional known processes.

After the orifice plate 104 is produced as discussed above, the printhead 80 is completed by attaching the resistor assembly 96 (e.g., the support member 82 having the resistors 86 thereon) to the orifice plate 104. In a preferred embodiment, fabrication of the printhead 80 is accomplished using tape automated bonding ("TAB") technology. The use of this particular process to produce the printhead 80 is again discussed in considerable detail in U.S. Patent 5,278,584. Likewise, background information concerning TAB technology is also generally provided in U.S. Patent 4,944,850 to Dion. In a TAB-based fabrication system, the processed film-type member 106 (e.g., the completed orifice plate 104) which has already been ablated and patterned with the circuit traces 114 and contact pads 120 actually exists in the form of multiple, interconnected "frames" on an elongate "tape", with each "frame" representing one orifice plate 104. The tape (not shown) is thereafter positioned (after cleaning in a conventional manner to remove impurities and other residual materials) in a TAB bonding apparatus having an optical alignment subsystem. Such an apparatus is well-known in the art and commercially available from many different sources including but not limited to the Shinkawa Corporation of Japan (model no. IL-20). Within the TAB bonding apparatus, the support member 82 associated with the resistor assembly 96 and the orifice plate 104 are properly oriented so that (1) the orifices 124 are in precise alignment with the resistors 86 on the support member 82; and (2) the beam-type leads 154 associated with the circuit traces 114 on the orifice plate 104 are in alignment with and positioned against the contact regions 92 on the support member 82. The TAB bonding apparatus then uses a "gang-bonding" method (or other similar procedures) to press the leads 154 onto the contact regions 92 (which is accomplished through the open windows 150, 152 in the orifice plate 104). The TAB bonding apparatus thereafter applies heat in accordance with conventional bonding processes to secure these components together. It is also important to note that other standard bonding techniques may likewise be used for this purpose including but not limited to ultrasonic bonding, conductive epoxy bonding, and solid paste application processes. In this regard, the claimed invention shall not be restricted to any particular processing techniques associated with the printhead 80.

As previously noted in connection with the conventional cartridge unit 10 in FIG. 1, additional layers of material are typically present between the orifice plate 104 and resistor assembly 96. These additional layers perform various functions including electrical insulation, adhesion of the orifice plate 104 to the resistor assembly 96, and the like. With reference to FIG. 2, the printhead 80 is illustrated in cross-section after attachment to the housing 12 of the cartridge unit 10. As illustrated in FIG. 2, the upper surface 84 of the support member 82 likewise includes an intermediate barrier layer 156 thereon which covers the conductive traces 90 (FIG. 1), but is positioned between and around the resistors 86 without covering them. As a result, an ink vaporization chamber 160 (FIG. 2) is formed directly above each resistor 86. Within each chamber 160, ink materials are heated, vaporized, and subsequently expelled through the orifices 124 in the orifice plate 104.

The barrier layer 156 (which is traditionally produced from conventional organic polymers, photoresist materials, or similar compositions as outlined in U.S. Patent 5,278,584 to Keefe et al.) is applied to the support member 82 using conventional photolithographic techniques or other methods known in the art for this purpose. In addition to clearly defining the vaporization chambers 160, the barrier layer 156 also functions as a chemical and electrical insulating layer. Positioned on top of the barrier layer as shown in FIG. 2 is an adhesive layer 164 which may involve a number of different compositions including uncured poly-isoprene photoresist which is applied using conventional photolithographic and other known methods. It is important to note that the use of a separate adhesive layer 164 may, in fact, not be necessary if the top of the barrier layer 156 can be made adhesive in some manner (e.g., if it consists of a material which, when heated, becomes pliable with adhesive characteristics). However, in accordance with the conventional structures and materials shown in FIGS. 1-2, a separate adhesive layer 164 is employed.

During the TAB bonding process discussed above, the printhead 80 (which includes the previously-described components) is ultimately subjected to heat and pressure within a heating/pressure-exerting station in the TAB bonding apparatus. This step (which may likewise be accomplished using other methods including external heating of the printhead 80) causes thermal adhesion of the internal components together (e.g., using the adhesive layer 164 shown in the embodiment of FIG. 2). As a result, the printhead assembly process is completed at this stage. The only remaining step involves cutting and separating the individual "frames" on the TAB strip (with each "frame" comprising an individual, completed printhead 80), followed by attachment of the printhead 80 to the housing 12 of the ink cartridge unit 10. Attachment of the printhead 80 to the housing 12 may be accomplished in many different ways. However, in a preferred embodiment illustrated schematically in FIG. 2, a portion of adhesive material 166 may be applied to either the mounting frame 56 on the housing 12 and/or selected locations on the bottom surface 112 of the orifice plate 104. The orifice plate 104 is then adhesively affixed to the housing 12 (e.g., on the mounting frame 56 associated with the outwardly-extending printhead support structure 34 shown in FIG. 1). Representative adhesive materials suitable for this purpose include commercially available epoxy resin and cyanoacrylate adhesives known in the art. During the affixation process, the support member 82 associated with the resistor assembly 96 is precisely positioned within the central cavity 50 as illustrated in FIG. 2 so that the support member 82 is located in the center of the mounting frame 56 (discussed above and illustrated in FIG. 1). In this manner, the ink flow passageways 100, 102 (FIG. 2) are formed which enable ink materials to flow from the ink outlet port 54 within the central cavity 50 into the vaporization chambers 160 for expulsion from the cartridge unit 10 through the orifices 124 in the orifice plate 104.

To generate a printed image 170 on a selected image-receiving medium 172 (e.g., plain paper, glossy paper, mylar transparency, and the like) using the cartridge unit 10, a supply of a selected ink composition 174 (schematically illustrated in FIG. 1) which resides within the interior compartment 30 of the housing 12 passes into and through the ink outlet port 54 within the bottom wall 52 of the central cavity 50. The ink composition 174 (which is specially formulated for use in the claimed process as discussed below) thereafter flows into and through the ink flow passageways 100, 102 in the direction of arrows 176, 180 toward the support member 82 having the resistors 86 thereon (e.g., the resistor assembly 96). The ink composition 174 then enters the vaporization chambers 160 directly above the resistors 86. Within the chambers 160, the ink composition 174 comes in contact with the resistors 86. To activate (e.g., energize) the resistors 86, the printer system (not shown) which contains the cartridge unit 10 causes electrical signals to travel from the printer unit to the contact pads 120 on the top surface 110 of the orifice plate 104. The electrical signals then pass through vias (not shown) within the plate 104 and subsequently travel along the circuit traces 114 on the bottom surface 112 of the plate 104 to the resistor assembly 96 containing the resistors 86. In this manner, the resistors 86 can be selectively energized and heated in order to cause ink vaporization and expulsion from the printhead 80 via the orifices 124 through the orifice plate 104. The ink composition 174 can then be delivered in a highly selective, on-demand basis to the image-receiving medium 172 to generate a printed image 170 thereon (FIG. 1).

It is important to emphasize that the printing process discussed above is applicable to a wide variety of different thermal inkjet cartridge designs. In this regard, the inventive concepts presented below shall not be restricted to any particular printing system. However, a representative, non-limiting example of a thermal inkjet cartridge of the type described above which may be used in connection with the claimed invention involves an inkjet cartridge sold by the Hewlett-Packard Company of Palo Alto, Calif. (USA) under the designation "51645A". Other ink cartridge units produced by the Hewlett-Packard Company which are prospectively applicable in the claimed process include products sold under the following designations: 51641A, 51640C, 51640A, 51629A, and 51649A. Likewise, further details concerning thermal inkjet processes in general are discussed in the Hewlett-Packard Journal, Vol. 39, No. 4 (August 1988), U.S. Patent 4,500,895 to Buck et al. and U.S. Patent. 4,771,295 to Baker et al.

### Present Invention.

Having described conventional thermal inkjet components and printing methods, the claimed invention and its beneficial features will now be presented. Although the description that follows is primarily directed to thermal inkjet printing, it will be apparent to those skilled in this art that other methods of inkjet printing, such as piezoelectric, will also be benefited by the teachings of the present invention.

Several physical properties of inks play dominant roles in the firing and directionality of ink from thermal inkjet pens. The properties of most interest are surface tension, or air-liquid interaction between air and ink, and wetting properties as exhibited by contact angle, or air-solid-liquid interaction, measurements. In the latter case, the solid is the orifice plate 104 that is made of KAPTON (or other aromatic polyimide) and the liquid is again the ink.

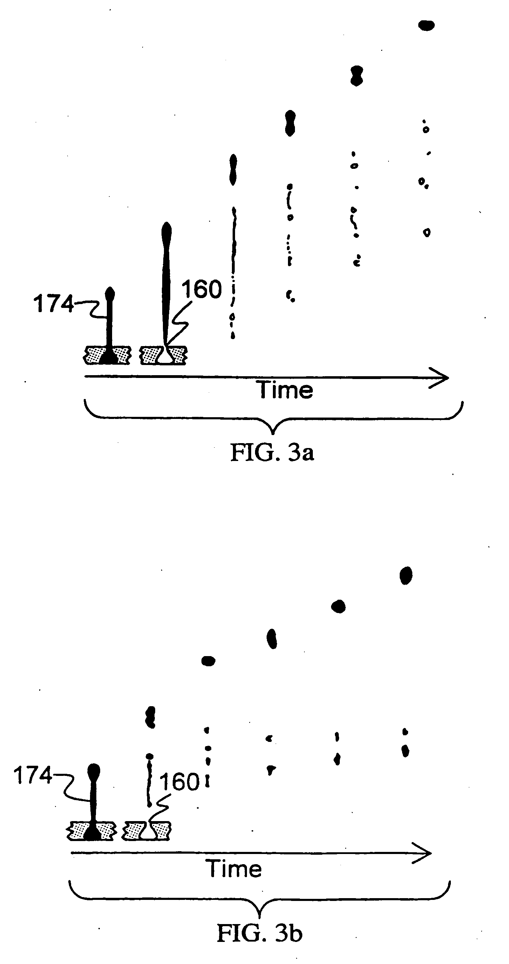

As part of an on-going study, the present inventors have investigated the effect of surface tension of the ink on both directionality and in tail breakup of the fired ink drop. Studies using both modeling and actual ink showed that the higher the surface tension, the less the tail breakup. Tail breakup is a significant contributor to print quality (PQ) degradation by generating satellite drops that do not land with the main drop, causing unevenness of text character outline, for example. So a beneficial characteristic of inks is to have as high a surface tension as possible for better edge acuity. Hewlett-Packard's black inks have much higher surface tension than its color inks for this reason; see, e.g., U.S. Patent 5,880,758, supra. The modeling results are in FIGS. 3a-3b, comparing the breakup of an ink having a surface tension of 25 dynes/cm (low surface tension ink - FIG. 3b) versus an ink having a surface tension of 100 dynes/cm (admittedly an ultra-high surface tension ink - FIG. 3a).

The present inventors have found that minimal tail breakup and improved drop trajectory of an inkjet ink is achieved by adding at least one surface active additive to the ink in an amount sufficient to provide the ink with a surface tension of at least 35 dyne/cm and a contact angle (with the orifice plate 104 comprising KAPTON) within a range of about 35 to 65 degrees. The surface active additive may be a surfactant, such as an amine oxide, a betaine, a sulfo-betaine, or a polymeric surfactant. Alternatively, or together with, the surface active additive may be an oligomer, such as a GTP (group transfer polymerization) polymer. These two types of surface active additives are now described in greater detail.

### 1. Surfactants

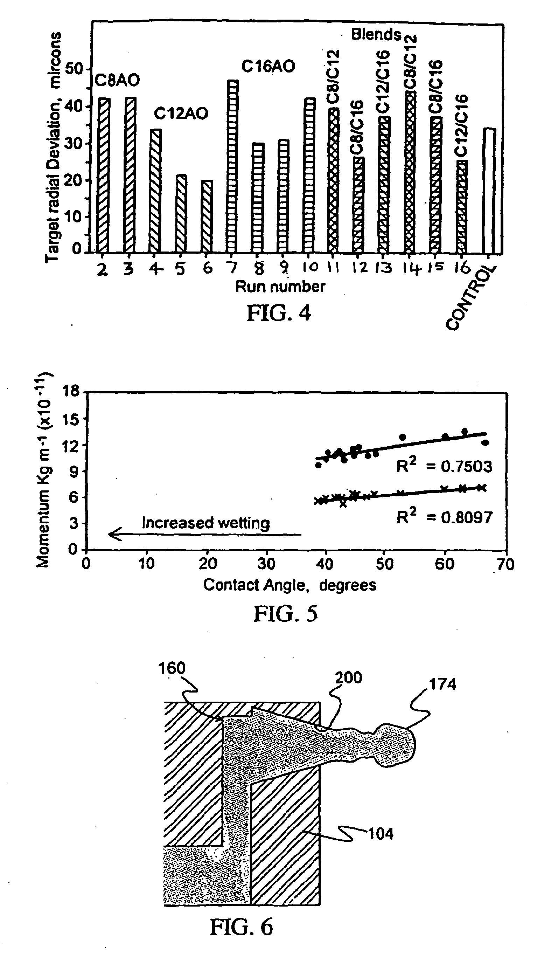

In addition to the surface tension aspect described above, it is also important for the inks to interact as much as possible with the walls 156 of the firing chamber 160 and barrel 200 of the nozzles, or orifices, 124 of the orifice plate 104 of the ink cartridge 10 because this also leads to better directionality. For example, FIG. 4 demonstrates the effect of different amine oxide (AO) surfactants and blends of these surfactants on directionality. The run numbers used in FIG. 4 and their relationship to ink composition are given in Table I below.

**Table I. Ink Formulations.**

| Run No. | C8AO (wt%) | C12AO (wt%) | C16AO (wt%) | Density (g/cm³, 23°C) | Viscosity (cps, 23°C) |
|---|---|---|---|---|---|
| Water | -- | -- | -- | 0.9975 | 0.95 |
| 1 | 0.01 | -- | -- | 1.0931 | 3.15 |
| 2 | 0.1 | -- | -- | 1.0917 | 3.14 |
| 3 | 1.0 | -- | -- | 1.0905 | 3.30 |
| 4 | -- | 0.05 | -- | 1.0916 | 3.12 |
| 5 | -- | 0.1 | -- | 1.0923 | 3.13 |
| 6 | -- | 1.0 | -- | 1.0898 | 3.32 |
| 7 | -- | -- | 0.005 | 1.0917 | 3.09 |
| 8 | -- | -- | 0.01 | 1.0915 | 3.10 |
| 9 | -- | -- | 0.1 | 1.0914 | 3.11 |
| 10 | -- | -- | 1.0 | 1.0910 | 3.22 |
| 11 | 0.1 | 0.1 | -- | 1.0924 | 3.14 |
| 12 | 0.1 | -- | 0.1 | 1.0921 | 3.13 |
| 13 | -- | 0.1 | 0.1 | 1.0919 | 3.12 |
| 14 | 1.0 | -- | 1.0 | 1.0890 | 3.54 |
| 15 | 1.0 | -- | 1.0 | 1.0904 | 3.34 |
| 16 | -- | 1.0 | 1.0 | 1.0904 | 3.39 |
| Control* | -- | -- | -- | 1.0616 | 3.77 |

| | | | | | |
|---|---|---|---|---|---|
| Note:* Control = cyan ink disclosed in U.S. Patent 5,772,742. | | | | | |

The amine oxide surfactants specifically studied included octyl dimethyl amine oxide (C8AO), dodecyl dimethyl amine oxide (C12AO), hexacecyl dimethyl amine oxide (C16AO), blends of (1) C8/C12, (2) C8/C16, and (3) C12/C16, and Control. The control ink, which was also the same basic composition to which the amine oxides were added, is disclosed in U.S. Patent 5,772,742, entitled "Dye Set for Improved Color Quality for Ink-Jet Printers", issued on June 30, 1998, to Patricia A. Wang. All formulation also contained 0.1 wt% Proxel GXL preservative.

A lower target radial deviation is desired, and it can be seen from FIG. 4 that C12AO provided the best values.

The amine oxides employed in the practice of the present invention are given by the formula 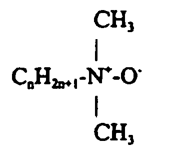 where n = 8 to 16.

The C8AO (octyl dimethyl amine oxide; n = 8) surfactant is too hydrophilic and prefers to interact with water than with the interior surfaces of materials such as the barrier layer 156 of the firing chamber 160 and nozzle walls 200. The C16AO (hexadecyl dimethyl amine oxide; n = 16) is too hydrophobic and interacts mostly with itself in forming micelles and other insoluble structures so that it too is not instrumental in affecting directionality. The C12AO (dodecyl dimethyl amine oxide; n = 12) is by far the best at achieving best drop directionality because it has the best blend of wetting and attraction to the interior firing surfaces. Both the surface tension and contact angle between both ink and KAPTON (orifice plate 104) and ink and polymethylacrylate (barrier layer 156) have been measured for the amine oxide surfactants; it was determined that the C12AO has the lowest values in both categories of these surfactants.

Furthermore, there is a strong correlation between drop momentum and KAPTON contact angle (better correlation than the surface tension), as shown in FIG. 5, wherein C12AO was used as the surfactant.

The effect of the KAPTON contact angle can be understood from a modeling study which showed that the highest shear rates and velocity vectors during the firing cycle are to be found along the walls of the barrier layer 156 of the chamber 160 and barrel 200. The shear profiles are seen in FIG. 6 for a pen employed in Hewlett-Packard's DesignJet 2500 printer, with the lighter the shading, the higher the shear and velocity profile. It stands to reason that, if the nozzle is aiming correctly, the more the ink interacts with the walls 200 (i.e., KAPTON material) of the nozzle 124 in the orifice plate 104, then the better because it will be directed to its target more accurately. This effect is clearly seen in FIG. 5 with C12AO where the concentration of the C12AO is increased in going from left to right, and contact angle correspondingly decreases.

The amine oxides suitably employed in the practice of the invention include those compounds with n greater than 8 and less than 16. Preferably, n = 12.

Related compounds are also useful in the practice of the present invention. Such related compounds include:
(1) betaines:

   R₁R₂R₃-N⁺-CH₂-COO⁻
(2) sulfo-betaines:

   R₁R₂R₃-N⁺-CH₂-SO₃⁻

   where
   R₁ is a C₈ to C₂₂ alkyl chain, and
   R₂ and R₃ are independently C₁ to C₄ alkyl chains.

The surfactant (amine oxide, betaine, sulfo-betaine, has a concentration in the ink that is at or below its critical micelle concentration (cmc). For example, the cmc for C12AO is 0.5 wt%, so the concentration of C12AO in the ink must be at or below 0.5 wt%. (The cmc is the concentration of colloidal species where simple electrolyte or non-electrolyte chemistry lessens in importance to colloid chemistry. For amphoteric and non-ionic surfactants, this is the concentration of surfactants where micelles, or aggregated surfactant molecules, begin to influence media chemistry.)

As a result of the foregoing, it is seen that an inkjet ink having better directionality and hence better print quality ink would have the seemingly incompatible properties of relatively high surface tension and relatively low contact angle between the ink and the orifice plate material. The surfactant(s) employed in the practice of the present invention provide the ink with the requisite surface tension and contact angle to provide the improved results.

### 2. Oligomers

In addition to using any of the foregoing surfactants (amine oxides, betaines and/or sulfo-betaines), another way around this incompatibility (high surface tension and low contact angle) is to use very short length polymers, more properly called oligomers, which tend not to concentrate at the air-ink interface and therefore have high surface tension; yet, because they are highly polar, will interact strongly with the chamber walls which tend to be polar materials like polyimides, urethanes, acrylates, etc. These oligomers are available from E.I. duPont de Nemours Company as shorter versions of the polymers that are used to stabilize black ink pigments in the inks used in the following DeskJet printers: DeskJet 2000, DeskJet 600 series, DeskJet 800, and DeskJet 900 series. If the oligomers are too long, they will eventually affect the surface tension; consequently, there is a balance to achieve between length and physical properties. Other oligomers other than the GTP-type acrylates and methacrylates that duPont is capable of making may also work in the practice of the present invention. Other solvents added to the ink should also have high surface tension such that the surface tension of the ink is at least 35 dyne/cm. Examples of such desirable high surface tension solvents include N-methyl formamide and 2-pyrrolidone.

Examples of GTP-type oligomers (where GTP = group transfer polymerization) are given by the general formula: 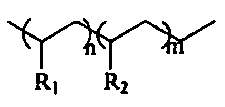 where:
R₁ = 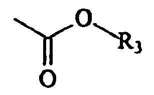
R₂ = ―COO⁻M⁺, ―SO₃⁻M⁺, ―N⁺(R₄)₃X⁻
R₃ = 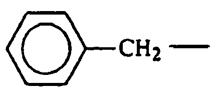 C₁ to C₃₀ alkyl, aryl, or alkylaryl radical
R₄ = independently any of the R₃ moieties.
M⁺ = Na⁺, K⁺, (CH₃)₄N⁺, (C₂H₅)₄N⁺.
X⁻ = F⁻, Cl⁻, Br⁻,

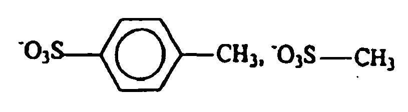

n is any integer of 1 to 100; and
m is any integer of 1 to 100.

The concentration of the oligomer in the ink is subject to the same considerations discussed above with regard to critical micelle concentration and the same ranges. However, in practice, the oligomers tend to be somewhat higher in concentration than the surfactants.

Either one or more surfactants, as disclosed herein, or one or more oligomers, as disclosed herein, may be added to the ink to provide the indicated surface tension and contact angle. Preferably, a combination at least one surfactant and at least one oligomer is beneficially employed in the practice of the present invention.

The inks of the present invention comprise (1) 5 to 50 wt%, preferably 10 to 25 wt%, water-miscible organic co-solvent, (2) 0.05 to 10 wt%, preferably 0.5 to 10 wt%, colorant (pigment or dye), (3) 0.01 to 10 wt%, preferably 0.01 to 5 wt%, and most preferably 0.05 to 2 wt%, surface active additive (one or more surfactant plus one or more oligomer) of the present invention, and (4) water. Other components and additives to the ink may also be present, as discussed below.

The co-solvents comprise one or more organic, water-miscible solvents commonly employed in ink-jet printing. Classes of co-solvents employed in the practice of this invention include, but are not limited to, aliphatic alcohols, aromatic alcohols, diols, glycol ethers, poly(glycol) ethers, caprolactams, formamides, acetamides, and long chain alcohols. Examples of compounds employed in the practice of this invention include, but are not limited to, primary aliphatic alcohols of 30 carbons or less, primary aromatic alcohols of 30 carbons or less, secondary aliphatic alcohols of 30 carbons or less, secondary aromatic alcohols of 30 carbons or less, 1,2-alcohols of 30 carbons or less, 1,3-alcohols of 30 carbons or less, 1,ω-alcohols of 30 carbons or less, ethylene glycol alkyl ethers, propylene glycol alkyl ethers. poly(ethylene glycol) alkyl ethers, higher homologs of poly(ethylene glycol) alkyl ethers, poly(propylene glycol) alkyl ethers, higher homologs of poly(propylene glycol) alkyl ethers, N-alkyl caprolactams, unsubstituted caprolactams, substituted formamides, unsubstituted formamides, substituted acetamides, and unsubstituted acetamides. Specific examples of co-solvents that are preferably employed in the practice of this invention include, but are not limited to, N-methyl pyrrolidone, 1,5-pentanediol, 2-pyrrolidone, diethylene glycol, 1,3-(2-methyl)-propanediol, 1,3,5-(2-methyl)-pentanetriol, tetramethylene sulfone, 3-methoxy-3-methylbutanol, glycerol, and 1,2-alkyldiols.

The following pigments are useful as colorants in the practice of the invention; however, this listing is not intended to limit the invention. The following pigments are available from BASF: Paliogen® Orange, Heliogen® Blue L 6901F, Heliogen® Blue NBD 7010, Heliogen® Blue K 7090, Heliogen® Blue L 7101F, Paliogen® Blue L 6470, Heliogen® Green K 8683, and Heliogen® Green L 9140. The following pigments are available from Cabot: Monarch® 1400, Monarch® 1300, Monarch® 1100, Monarch® 1000, Monarch® 900, Monarch® 880, Monarch® 800, Monarch® 700, Cabojet200, Cabojet300, IJX55, and IJX76. The following pigments are available from Ciba-Geigy: Chromophtal® Yellow 3G, Chromophtal® Yellow GR, Chromophtal® Yellow 8G, Igrazin® Yellow 5GT, Igralite® Rubine 4BL, Monastral® Magenta, Monastral® Scarlet, Monastral® Violet R, Monastral® Red B, and Monastral® Violet Maroon B. The following pigments are available from Columbian: Raven 7000, Raven 5750, Raven 5250, Raven 5000, and Raven 3500. The following pigments are available from Degussa: Color Black FW 200, Color Black FW 2, Color Black FW 2V, Color Black FW 1, Color Black FW 18, Color Black S 160, Color Black S 170, Special Black 6, Special Black 5, Special Black 4A, Special Black 4, Printex U, Printex V, Printex 140U, and Printex 140V. The following pigment is available from DuPont: Tipure® R-101. The following pigments are available from Heubach: Dalamar® Yellow YT-858-D and Heucophthal® Blue G XBT-583D. The following pigments are available from Hoechst: Permanent Yellow GR, Permanent Yellow G, Permanent Yellow DHG, Permanent Yellow NCG-71, Permanent Yellow GG, Hansa Yellow RA, Hansa Brilliant Yellow 5GX-02, Hansa Yellow-X, Novoperm® Yellow HR, Novoperm® Yellow FGL, Hansa Brilliant Yellow 10GX, Permanent Yellow G3R-01, Hostaperm® Yellow H4G, Hostaperm® Yellow H3G, Hostaperm® Orange GR, Hostaperm® Scarlet GO, and Permanent Rubine F6B. The following pigments are available from Mobay: Quindo® Magenta, Indofast® Brilliant Scarlet, Quindo® Red R6700, Quindo® Red R6713, and Indofast® Violet. The following pigments are available from Sun Chemical: L74-1357 Yellow, L75-1331 Yellow, L75-2577 Yellow, YGD 9374 Yellow, YHD 9123 Yellow, YCD 9296 Yellow, YFD 1100 Yellow, QHD6040 Magenta, QFD1180 Magenta, RFD3217 Magenta, QFD1146 Magenta. RFD9364 Magenta, QFD 9334 Magenta, BCD6105 Cyan, BCD9448 Cyan, BCD6060 Cyan, BFD5002 Cyan, BFD1121 Cyan, and LHD9303 Black.

Dyes, whether water-soluble or water-insoluble, may be employed as colorants in the practice of the present invention. Examples of water-soluble dyes include the sulfonate and carboxylate dyes, specifically, those that are commonly employed in ink-jet printing. Specific examples include: Sulforhodamine B (sulfonate), Acid Blue 113 (sulfonate), Acid Blue 29 (sulfonate), Acid Red 4 (sulfonate), Rose Bengal (carboxylate), Acid Yellow 17 (sulfonate), Acid Yellow 29 (sulfonate), Acid Yellow 42 (sulfonate), Acridine Yellow G (sulfonate), Nitro Blue Tetrazolium Chloride Monohydrate or Nitro BT, Rhodamine 6G, Rhodamine 123, Rhodamine B, Rhodamine B Isocyanate, Safranine O, Azure B, Azure B Eosinate, Basic Blue 47, Basic Blue 66, Thioflacin T (Basic Yellow 1), and Auramine O (Basic Yellow 2), all available from Aldrich Chemical Company. Further specific examples of water-soluble dyes (anionic) include Direct Yellow 132, Direct Blue 199, and Magenta 377 (Ilford AG, Switzerland), alone or together with Acid Red 52. Examples of water-insoluble dyes include azo, xanthene, methine, polymethine, and anthroquinone dyes. Specific examples of water-insoluble dyes include Ciba-Geigy Orasol Blue GN, Ciba-Geigy Orasol Pink, and Ciba-Geigy Orasol Yellow.

The balance of the ink is water, together with other additives commonly added to ink-jet inks, which are employed to optimize the properties of the ink for specific applications. For example, as is well-known to those skilled in the art, biocides may be used in the ink composition to inhibit growth of microorganisms, sequestering agents such as EDTA may be included to eliminate deleterious effects of heavy metal impurities, and buffer solutions may be used to control the pH of the ink. Other known additives such as viscosity modifiers and other acrylic or non-acrylic polymers may be added to improve various properties of the ink compositions as desired.

An example of an ink composition suitably employed in the practice of the present invention comprises:

| | |
|---|---|
| colorant | 2 wt% |
| C12AO | 0.1 wt% |
| GTP oligomer* | 1 wt% |
| co-solvent | 5 to 10 wt% |
| water | balance. |

In the GTP polymer, R₁ is as shown earlier, R₂ = -COO⁻K⁺, R₃ = benzyl (-CH₂-C₆H₅), n = 14-20, and m = 20-30. This ink has a surface tension of 36 dyne/cm and a contact angle (with KAPTON) of 45 degrees.

### INDUSTRIAL APPLICABILITY

The inkjet inks having the surface active additive that provides the ink with a surface tension of at least 35 dyne/cm and a contact angle (with KAPTON orifice plates) of between 35 and 65 degrees are expected to find use in inkjet printing.

## Claims

1. An inkjet printhead (80) comprising ink (174) and an orifice (124) in an orifice plate (104), said inkjet ink (174) containing at least one surface active additive selected from the group consisting of:
(a) a betaine having the formula
R₁R₂R₃-N⁺-CH₂-COO⁻
where R₁ is a C₈ to C₂₂ alkyl chain, and
R₂ and R₃ are independently C₁ to C₄ alkyl chains;
(b) a sulfo-betaine having the formula
R₁R₂R₃-N⁺-CH₂-SO₃⁻
where R₁ is a C₈ to C₂₂ alkyl chain, and
R₂ and R₃ are independently C₁ to C₄ alkyl chains; and
(c) a group transfer polymerization polymer having the formula 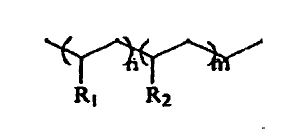 where:
R₁ = 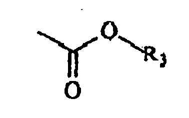
R₂ = -COO⁻M⁺, -SO3⁻M⁺, -N⁺(R₄)₃ X⁻
R₃ = 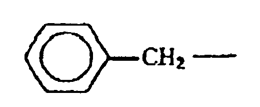 C₁ to C₃₀ alkyl, aryl, or alkylaryl radical
R₄ = independently any of the R₃ moieties;
M⁺ = Na⁺, K⁺, (CH₃)₄N⁺ and (C₂H₅)₄N⁺;
X = F⁻, Cl⁻, Br⁻, 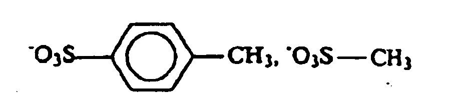
n is any integer of 1 to 100; and
m is any integer of 1 to 100; and
wherein said inkjet ink (174) having a surface tension of at least 35 dyne/cm and a contact angle with said orifice plate (104) having a value within a range of 35 to 65 degrees.

2. The inkjet printhead (80) of Claim 1 wherein said orifice plate (104) comprises an aromatic polyimide.

3. The inkjet printhead (80) of Claim 1 wherein said surface active additive is present in said ink in an amount that is at or below its critical micelle formation concentration.

4. The inkjet printhead (80) of Claim 3 wherein said amount is 0.01 to 10 wt.%.

5. An inkjet ink (174) containing at least one surface active additive selected from the group consisting of:
(a) a betaine having the formula
R₁R₂R₃-N⁺-CH₂-COO⁻
where R₁ is a C₈ to C₂₂ alkyl chain, and
R₂ and R₃ are independently C₁ to C₄ alkyl chains;
(b) a sulfo-betaine having the formula
R₁R₂R₃-N⁺-CH₂-SO₃⁻
where R₁ is a C₈ to C₂₂ alkyl chain, and
R₂ and R₃ are independently C₁ to C₄ alkyl chains; and
(c) a group transfer polymerization polymer having the formula 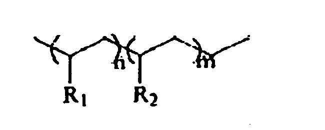 where:
R₁ = 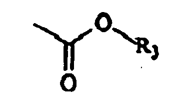
R₂ = -COO⁻M⁺, -SO3⁻M⁺, -N⁺(R₄)₃ X⁻
R₃ = 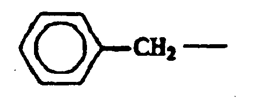 C₁ to C₃₀ alkyl, aryl, or alkylaryl radical
R₄ = independently any of the R₃ moieties;
M⁺ = Na⁺, K⁺, (CH₃)₄N⁺ and (C₂H₅)₄N⁺;
X = F⁻, Cl⁻, Br⁻, 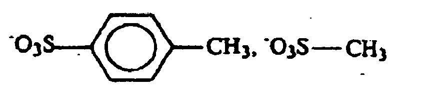
n is any integer of 1 to 100; and
m is any integer of 1 to 100,
wherein the inkjet ink has a surface tension of at least 35 dyne/cm.

6. The inkjet ink (174) of Claim 5 wherein said surface active additive is present in said ink in an amount that is at or below its critical micelle formation concentration.

7. The inkjet ink (174) of Claim 5 wherein said amount is 0.01 to 10 wt.%.

8. A method of reducing tail breakup and improving drop trajectory in an inkjet ink, said method comprising adding at least one surface active additive as defined in claim 5 to an inkjet ink to provide said inkjet ink with a surface tension of at least 35 dyne/cm and a contact angle of 35 to 65 degrees between said ink-jet ink and an orifice plate (104) containing a plurality of orifices (124) in a printhead (80) through which said inkjet ink is jetted.

9. The method according to Claim 8 wherein said surface active additive is present in said ink in an amount that is at,or below its critical micelle formation concentration.

10. The method according to Claim 8 wherein said amount is 0.01 to 10 wt.%.

11. Use of a surface active additive for reducing tail breakup and improving drop trajectory in an inkjet ink (174), wherein said surface active additive is selected from the group consisting of:
(a) a betaine having the formula
R₁R₂R₃-N⁺-CH₂-COO⁻
where R₁ is a C₈ to C₂₂ alkyl chain, and
R₂ and R₃ are independently C₁ to C₄ alkyl chains;
(b) a sulfo-betaine having the formula
R₁R₂R₃-N⁺-CH₂-SO₃⁻
where R₁ is a C₈ to C₂₂ alkyl chain, and
R₂ and R₃ are independently C₁ to C₄ alkyl chains; and
(c) a group transfer polymerization polymer having the formula 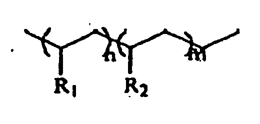 where:
R₁ = 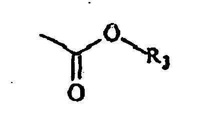
R₂ = -COO⁻M⁺, -SO3⁻M⁺, -N⁺(R₄)₃ X⁻
R₃ = 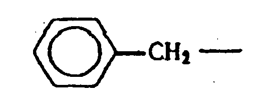 C₁ to C₃₀ alkyl, aryl, or alkylaryl radical
R₄ = independently any of the R₃ moieties;
M⁺ = Na⁺, K⁺, (CH₃)₄N⁺ and (C₂H₅)₄N⁺;
X = F⁻, Cl⁻, Br⁻, 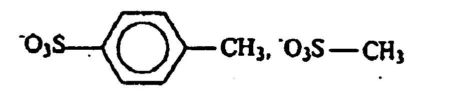
n is any integer of 1 to 100; and
m is any integer of 1 to 100; and
(d) an amine oxide having the formula 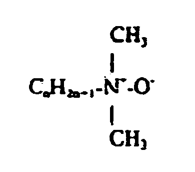
where n is greater than 8 and less than 16.

12. The use according to Claim 11 wherein said surface active additive is present in said ink in an amount that is at or below its critical micelle formation concentration.

13. The use according to Claim 11 wherein said amount is 0.01 to 10 wt.%.

## Patentansprüche

1. Ein Tintenstrahldruckkopf (80), der Tinte (174) und eine Öffnung (124) in einer Öffnungsplatte (104) aufweist, wobei die Tintenstrahltinte (174) zumindest einen oberflächenaktiven zusatzstoff enthält, der aus der Gruppe ausgewählt ist, die aus Folgendem besteht:
(a) einem Betain, das die Formel
R₁R₂R₃-N⁺-CH₂-COO⁻
aufweist, wobei R₁ eine C₈- bis C₂₂-Alkylkette ist, und
R₂ und R₃ unabhängig voneinander C₁- bis C₄-Alkylketten sind;
(b) einem Sulfobetain, das die Formel
R₁R₂R₃-N⁺-CH₂-SO₃⁻
aufweist, wobei R₁ eine C₈- bis C₂₂-Alkylkette ist, und
R₂ und R₃ unabhängig voneinander C₁- bis C₄-Alkylketten sind; und
(c) einem Gruppentransferpolymerisationspolymer, das die Formel 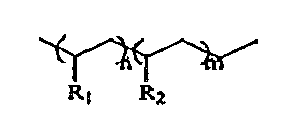 aufweist, wobei:
R₁ = 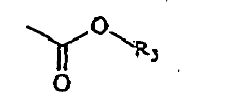
R₂ = -COO⁻M⁺, -SO3⁻M⁺, -N⁺(R₄)₃X⁻
R₃ = 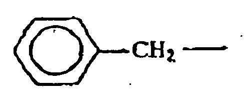
C₁- bis C₃₀-Alkyl, -Aryl oder -Alkylarylradikal,
R₄ = unabhängig einer der R₃-Anteile;
M⁺ = Na⁻, K⁺, (CH₃)₄N⁺ und (C₂H₅)₄N⁺;
X = F⁻, Cl⁻, Br⁻, 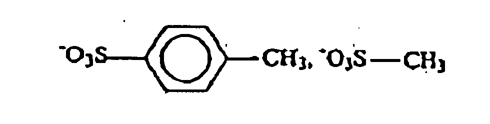
n eine beliebige Ganzzahl zwischen 1 und 100 ist; und
m eine beliebige Ganzzahl zwischen 1 und 100 ist; und
wobei die Tintenstrahltinte (174) eine Oberflächenspannung von zumindest 35 Dyn/cm aufweist und ein Kontaktwinkel mit der Öffnungsplatte (104) einen Wert in einem Bereich von 35 bis 65 Grad aufweist.

2. Der Tintenstrahldruckkopf (80) gemäß Anspruch 1, bei dem die Öffnungsplatte (104) ein aromatisches Polyimid umfasst.

3. Der Tintenstrahldruckkopf (80) gemäß Anspruch 1, bei dem der oberflächenaktive Zusatzstoff in einer Menge, die bei oder unterhalb seiner kritischen Mizellenbildungskonzentration liegt, in der Tinte vorliegt.

4. Der Tintenstrahldruckkopf (80) gemäß Anspruch 3, bei dem die Menge 0,01 bis 10 Gewichtsprozent beträgt.

5. Eine Tintenstrahltinte (174), die zumindest einen oberflächenaktiven Zusatzstoff enthält, der aus der Gruppe ausgewählt ist, die aus Folgendem besteht:
(a) einem Betain, das die Formel
R₁R₂R₃-N⁺-CH₂-COO⁻
aufweist, wobei R₁ eine C₈- bis C₂₂-Alkylkette ist, und
R₂ und R₃ unabhängig voneinander C₁- bis C₄-Alkylketten sind;
(b) einem Sulfobetain, das die Formel
R₁R₂R₃-N⁺-CH₂-SO₃⁻
aufweist, wobei R₁ eine C₈- bis C₂₂-Alkylkette ist, und
R₂ und R₃ unabhängig voneinander C₁- bis C₄-Alkylketten sind; und
(c) einem Gruppentransferpolymerisationspolymer, das die Formel 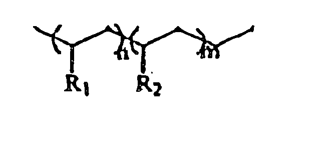 aufweist, wobei:
R₁ = 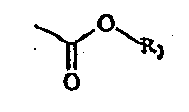
R₂ = -COO⁻M⁺, -SO₃-M⁺, -N⁺(R₄)₃X⁻
R₃ = 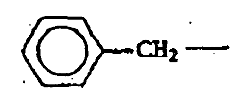
C₁- bis C₃₀-Alkyl, -Aryl oder -Alkylarylradikal,
R₄ = unabhängig einer der R₃-Anteile;
M⁺ = Na⁺, (CH₃)₄N⁺ und (C₂H₅)₄N⁺;
X = F⁻, Cl⁻, Br⁻, 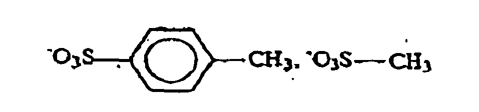
n eine beliebige Ganzzahl zwischen 1 und 100 ist; und
m eine beliebige Ganzzahl zwischen 1 und 100 ist; und
wobei die Tintenstrahltinte eine Oberflächenspannung von zumindest 35 Dyn/cm aufweist.

6. Die Tintenstrahltinte (174) gemäß Anspruch 5, bei dem der oberflächenaktive Zusatzstoff in einer Menge, die bei oder unterhalb seiner kritischen Mizellenbildungskonzentration liegt, in der Tinte vorlegt.

7. Die Tintenstrahltinte (174) gemäß Anspruch 5, bei der die Menge 0,01 bis 10 Gewichtsprozent beträgt.

8. Ein Verfahren zum Verringern eines Schweif-Aufbrechens und zum Verbessern der Tropfenbahn bei einer Tintenstrahltinte, wobei das Verfahren ein Hinzufügen zumindest eines oberflächenaktiven Zusatzstoffes gemäß der Definition im Anspruch 5 zu einer Tintenstrahltinte umfasst, um die Tintenstrahltinte mit einer Oberflächenspannung von zumindest 35 Dyn/cm und einem Kontaktwinkel zwischen 35 und 65 Grad zwischen der Tintenstrahltinte und einer Öffnungsplatte (104) zu versehen, die eine Mehrzahl von Öffnungen (124) in einem Druckkopf (80) enthält, durch die die Tintenstrahltinte ausgestoßen wird.

9. Das Verfahren gemäß Anspruch 8, bei dem der oberflächenaktive Zusatzstoff in einer Menge, die bei oder unterhalb seiner kritischen Mizellenbildungskonzentration liegt, in der Tinte vorliegt.

10. Das Verfahren gemäß Anspruch 8, bei dem die Menge 0,01 bis 10 Gewichtsprozent beträgt.

11. Verwendung eines oberflächenaktiven Zusatzstoffes zum Verringern eines Schweif-Aufbrechens und zum Verbessern der Tropfenbahn bei einer Tintenstrahltinte (174), wobei der oberflächenaktive Zusatzstoff aus der Gruppe ausgewählt ist, die aus Folgendem besteht:
(a) einem Betain, das die Formel
R₁R₂R₃-N⁺-CH₂-COO⁻
aufweist, wobei R₁ eine C₈- bis C₂₂-Alkylkette ist, und
R₂ und R₃ unabhängig voneinander C₁- bis C₄-Alkylketten sind;
(b) einem Sulfobetain, das die Formel
R₁R₂R₃-N⁺-CH₂-SO₃⁻
aufweist, wobei R₁ eine C₈- bis C₂₂-Alkylkette ist, und
R₂ und R₃ unabhängig voneinander C₁- bis C₄-Alkylketten sind; und
(c) einem Gruppentransferpolymerisationspolymer, das die Formel 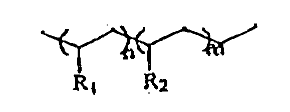 aufweist, wobei:
R₁ = 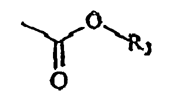
R₂ = -COO⁻M⁺, -SO3⁻M⁺, -N⁺(R₄)₃X⁻
R₃ = 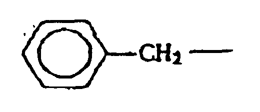
C₁- bis C₃₀-Alkyl, -Aryl oder -Alkylarylradikal,
R₄ = unabhängig einer der R₃-Anteile;
M⁺ = Na⁺, K⁺, (CH₃)₄N⁺ und (C₂H₅)₄N⁺;
X = F⁻, Cl⁻, Br⁻, 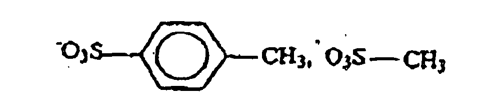
n eine beliebige Ganzzahl zwischen 1 und 100 ist; und
m eine beliebige Ganzzahl zwischen 1 und 100 ist; und
(d) einem Aminoxid, das die Formel 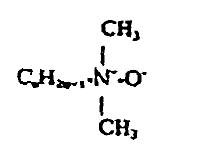 aufweist, wobei n größer als 8 und kleiner als 16 ist.

12. Die Verwendung gemäß Anspruch 11, bei der der oberflächenaktive Zusatzstoff in einer Menge, die bei oder unterhalb seiner kritischen Mizellenbildungskonzentration liegt, in der Tinte vorliegt.

13. Die Verwendung gemäß Anspruch 11, bei der die Menge 0,01 bis 10 Gewichtsprozent beträgt.

## Revendications

1. Tête d'impression à jet d'encre (80) comprenant de l'encre (174) et un orifice (124) dans une plaque à orifice (104), ladite encre pour jet d'encre (174) contenant au moins un additif tensioactif choisi dans le groupe constitué de :
(a) une bétaïne ayant la formule :
R₁R₂R₃-N⁺-CH₂-COO⁻
où R₁ est une chaîne alkyle en C₈ à C₂₂, et
R₂ et R₃ sont indépendamment des chaînes alkyle en C₁ à C₄ ;
(b) une sulfo-bétaïne ayant la formule
R₁R₂R₃-N⁺-CH₂-SO₃⁻
où R₁ est une chaîne alkyle en C₈ à C₂₂, et
R₂ et R₃ sont indépendamment des chaînes alkyle en C₁ à C₄ ; et
(c) un polymère de polymérisation par transfert de groupe ayant la formule 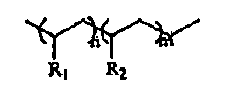 où
R₁ = 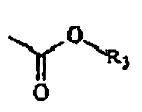
R₂ = -COO⁻M⁺, -SO3⁻M⁺, -N⁺(R₄)₃X⁻
R₃ = 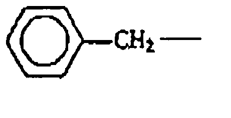
un radical alkyle, aryle ou alkylaryle en C₁ à C₃₀,
R₄ = indépendamment l'un quelconque des fragments R₃ ;
M⁺ = Na⁺, K⁺, (CH₃)₄N⁺ et (C₂H₅)₄N^{+ ;}
X = F⁻, Cl⁻, Br⁻, 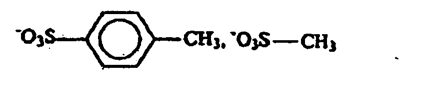
n est n'importe quel nombre entier entre 1 et 100 ; et
m est n'importe quel nombre entier entre 1 et 100 ; et
dans laquelle ladite encre pour jet d'encre (174) a une tension de surface d'au moins 35 dynes/cm et un angle de contact avec ladite plaque à orifices (104) ayant une valeur dans une gamme comprise entre 35 et 65 degrés.

2. Tête d'impression à jet d'encre (80) selon la revendication 1, dans laquelle ladite plaque à orifices (104) comprend un polyimide aromatique.

3. Tête d'impression à jet d'encre (80) selon la revendication 1, dans laquelle ledit additif tensioactif est présent dans ladite encre dans une quantité qui est égale ou inférieure à sa concentration micellaire critique.

4. Tête d'impression à jet d'encre (80) selon la revendication 3, dans laquelle ladite quantité est comprise entre 0,01 et 10% en poids.

5. Encre pour jet d'encre (174) contenant au moins un additif tensioactif choisi dans le groupe constitué de :
(a) une bétaïne ayant la formule :
R₁R₂R₃-N⁺-CH₂-COO⁻
où R₁ est une chaîne alkyle en C₈ à C₂₂, et
R₂ et R₃ sont indépendamment des chaînes alkyle en C₁ à C₄ ;
(b) une sulfo-bétaïne ayant la formule
R₁R₂R₃-N⁺-C H₂-SO₃⁻
où R₁ est une chaîne alkyle en C₈ à C₂₂, et
R₂ et R₃ sont indépendamment des chaînes alkyle en C₁ à C₄ ; et
(c) un polymère de polymérisation par transfert de groupe ayant la formule : 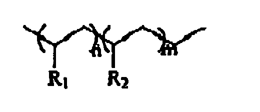 où
R₁ = 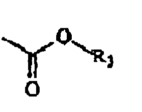
R₂ = -COO⁻M⁺, -SO3⁻M⁺, -N⁺(R₄)₃X⁻
R₃ = 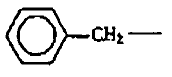 un radical alkyle, aryle ou alkylaryle en C₁ à C₃₀
R₄ = indépendamment l'un quelconque des fragments R₃ ;
M⁺ + Na⁺, K⁺, (CH₃)₄N⁺ et (C₂H₅)₄N^{+ ;}
X = F⁻, Cl⁻, Br⁻, 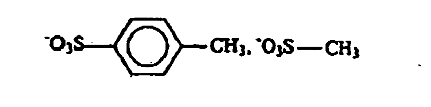
n est n'importe quel nombre entier entre 1 et 100 ; et
m est n'importe quel nombre entier entre 1 et 100 ; et
dans lequel ladite encre pour jet d'encre a une tension de surface d'au moins 35 dynes/cm.

6. Encre pour jet d'encre (174) selon la revendication 5, dans laquelle ledit additif tensioactif est présent dans ladite encre dans une quantité qui est égale ou inférieure à sa concentration micellairecritique.

7. Encre pour jet d'encre (174) selon la revendication 5 dans laquelle ladite quantité est comprise entre 0,01 et 10% en poids.

8. Méthode de réduction de la fragmentation de queue et d'amélioration de la trajectoire des gouttes dans une encre pour jet d'encre, ladite méthode comprenant l'addition d'au moins un additif tensioactif comme défini dans la revendication 5, à une encre pour jet d'encre, afin de doter ladite encre pour jet d'encre d'une tension de surface d'au moins 35 dynes/cm et d'un angle de contact de 35 à 65 degrés entre ladite encre pour jet d'encre et une plaque à orifices (104) contenant une pluralité d'orifices (124) dans une tête d'impression (80) à travers laquelle ladite encre pour jet d'encre est projetée.

9. Méthode selon la revendication 8, dans laquelle ledit additif tensioactif est présent dans ladite encre dans une quantité qui est égale ou inférieure à sa concentration micellaire critique.

10. Méthode selon la revendication 8, dans laquelle ladite quantité est comprise entre 0,01 et 10% en poids.

11. Utilisation d'un additif tensioactif pour réduire la fragmentation de queue et améliorer la trajectoire des gouttes dans une encre pour jet d'encre (174), dans laquelle ledit additif tensioactif est choisi dans le groupe constitué de :
(a) une bétaïne ayant la formule :
R₁R₂R₃-N⁺-CH₂-COO⁻
où R₁ est une chaîne alkyle en C₈ à C₂₂, et
R₂ et R₃ sont indépendamment des chaînes alkyle en C₁ à C₄ ;
(b) une sulfo-bétaïne ayant la formule
R₁R₂R₃-N+-CH₂-SO₃⁻
où R₁ est une chaîne alkyle en C₈ à C₂₂, et
R₂ et R₃ sont indépendamment des chaînes alkyle en C₁ à C₄ ; et
(c) un polymère de polymérisation par transfert de groupe ayant la formule 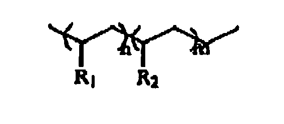 où
R₁ = 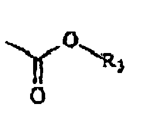
R₂ = -COO⁻M⁺, -SO3⁻M⁺, -N⁺(R₄)₃X⁻
R₃ = 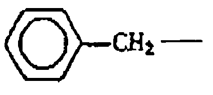 un radical alkyle, aryle ou alkylaryle en C₁ à C₃₀
R₄ = indépendamment l'un quelconque des fragments R₃ ;
M⁺ = Na⁺, K⁺, (CH₃)₄N⁺ et (C₂H₅)₄N^{+ ;}
X = F⁻, Cl⁻, Br⁻, 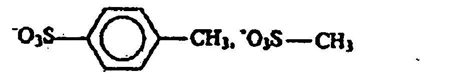
n est n'importe quel nombre entier entre 1 et 100 ; et
m est n'importe quel nombre entier entre 1 et 100 ; et
(d) un oxyde d'amine ayant la formule 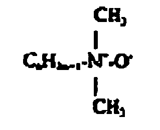 où n est supérieur à 8 et inférieur à 16.

12. Utilisation selon la revendication 11, dans laquelle ledit additif tensioactif est présent dans ladite encre dans une quantité qui est égale ou inférieure à sa concentration micellaire critique.

13. Utilisation selon la revendication 11, dans laquelle ladite quantité est de 0,01 à 10% en poids.
